# EUROPEAN PATENT SPECIFICATION

(11) **EP 3 186 330 B1**
(45) Date of publication and mention of the grant of the patent: **20.11.2019**
(21) Application number: 14900578.7
(22) Date of filing: 25.08.2014
(51) Int. Cl.: C09J 175/06, C09J 175/08, C09J 175/12, C08G 18/10, C08G 18/48, C08G 18/42, C08G 18/32

(54) **POLYURETHANE ADHESIVE COMPOSITION**
POLYURETHANKLEBSTOFFZUSAMMENSETZUNG
COMPOSITION ADHÉSIVE DE POLYURÉTHANE

(43) Date of publication of application: 05.07.2017
(73) Proprietor: Dow Global Technologies LLC, Midland, MI 48674 (US)
(72) Inventor: BAI, Chenyan, Shanghai 200237 (CN)
(74) Representative: Boult Wade Tennant LLP
(86) International application number: PCT/CN2014/085083
(87) International publication number: WO 2016/029336

(56) References cited:
- EP-A1- 1 914 282
- WO-A1-2004/052956
- US-A- 4 663 377
- US-A- 4 663 377
- US-A- 5 532 058
- US-A1- 2013 149 510

## Description

### FIELD OF THE INVENTION

The present invention relates to an adhesive composition for making laminates. In particular, the invention relates to an adhesive composition comprising a polyurethane dispersion.

### INTRODUCTION

Adhesive compositions are used to bond together substrates such as polyethylene (PE), polypropylene, polyester, polyamide, metal, paper or cellophane to form composite films, i.e., laminates. Laminates are usually used in the packaging industry, especially for food packaging. For environmental, health and safety reasons, adhesives are preferably aqueous or solvent free. Polyurethane dispersion is one commonly used component for solvent-free adhesives.

Different substrates usually have different requirements for the adhesive applied onto them. To bond PE substrates with metal substrates, for example, the adhesive is required to perform especially well in bond strength (BS), heat seal strength (HS) as well as low coefficient of friction (COF). It is desired to provide a polyurethane adhesive composition with good performance in BS, HS, and COF, and, therefore, is especially suitable for bonding PE and metal.

### SUMMARY OF THE INVENTION

The present invention provides a polyurethane adhesive composition comprising a polyurethane dispersion and from 1.2% to 20% by dry weight based on total dry weight of the polyurethane dispersion, a polyisocyanate crosslinker.

The polyurethane dispersion is a reaction product of, by dry weight, based on total dry weight of the polyurethane dispersion, from 10% to 40% of a monomeric aromatic diisocyanate, from 30% to 65% of a polyether polyol, from 15% to 30% of a polyester polyol having at least one aromatic group and one aliphatic group, from 0.1% to 8% of a polyamine, and from 0.5% to 10% of an ionic surfactant.

### DETAILED DESCRIPTION OF THE INVENTION

The polyurethane adhesive composition comprises a polyurethane dispersion.

The polyurethane dispersion preferably has a solid content, i.e., a content of polyurethane polymer particles, in the range of from 25% to 60%, preferably from 30% to 55%, and more preferably from 35% to 50%.

The polyurethane dispersion is a reaction product of a monomeric aromatic diisocyanate, a polyether polyol, a polyester polyol having at least one aromatic group and one aliphatic group, a polyamine, and an ionic surfactant. The polyurethane dispersion comprises by dry weight based on total dry weight of the polyurethane dispersion, from 10% to 40%, preferably from 12% to 38%, and more preferably from 15% to 35%, the monomeric aromatic diisocyanate; from 30% to 65%, preferably from 35% to 60%, and more preferably from 40% to 55%, the polyether polyol; from 15% to 30%, preferably from 18% to 28%, and more preferably from 20% to 25%, the polyester polyol having at least one aromatic group and one aliphatic group; from 0.1% to 8%, preferably from 0.2% to 6%, and more preferably from 0.5% to 5%, the polyamine; and from 0.5% to 10%, preferably from 1% to 8%, and more preferably from 1.5% to 6%, the ionic surfactant.

The polyols each has a molecular weight (Mw) of from 500 to 4000 g/mol, preferably from 750 to 3500 g/mol, and more preferably from 800 to 3000 g/mol. The polyols each has a functionality (the average number of isocyanate reactive sites per molecule) of from 1.8 to 4, preferably from 1.9 to 3, and more preferably from 2 to 2.5.

The polyurethane adhesive composition further comprises from 1.2% to 20%, preferably from 1.5% to 15%, and more preferably from 2.5% to 10% by dry weight based on total dry weight of the polyurethane dispersion, a polyisocyanate crosslinker.

### The polyurethane dispersion

The polyurethane dispersion of the present invention is prepared from polyurethane prepolymer. The polyurethane prepolymer of the present invention is prepared with the monomeric aromatic diisocyanate, the polyether polyol, and the polyester polyol having at least one aromatic group and one aliphatic group in any ways well-known to those of ordinary skill in the art, including condensation polymerization. The polyurethane prepolymer is preferably an NCO group terminated prepolymer. Organic solvent is preferably not used in the preparation of the polyurethane prepolymer.

The monomeric aromatic diisocyanates preferably have a molecular weight Mw of less than 300g/mol, and preferably of less than 275g/mol. The monomeric aromatic diisocyanates are selected from methylene diphenyl diisocyanate (MDI), toluene diisocyanate (TDI) and the combination thereof. TDI can be generally used with any commonly available isomer distribution. The most commonly available TDI has an isomer distribution of 80% of the 2,4-isomer and 20% of the 2,6-isomer. TDI with other isomer distributions can also be used. When MDI is used, it is preferably pure 4,4'-MDI or any combinations of MDI isomers. More preferably, it is pure 4,4'-MDI, and any combinations of 4,4'-MDI with other MDI isomers. When the combinations of 4,4'-MDI with other MDI isomers are used, the preferred concentration of 4,4'-MDI is from 25% to 75% of all the MDI isomers.

Polyether polyols are the polyaddition, the co-addition, and the graft products of ethylene oxide, propylene oxide, tetrahydrofuran, and butylene oxide, the condensation products of polyhydric alcohols, and any combination thereof. Suitable examples of the polyether polyols include polypropylene glycol (PPG), polyethylene glycol (PEG), polybutylene glycol (PBG), polytetramethylene ether glycol (PTMEG), and any combination thereof. Preferably, the polyether polyols are the combination of PEG and at least one another polyether polyol described above. More preferably, the polyether polyols are the combination of PEG and at least one of PPG, polybutylene glycol, and PTMEG.

The polyester polyols having at least one aromatic group and one aliphatic group are the condensation products of diols and dicarboxylic acids.

Suitable examples of the diols are ethylene glycol, butylene glycol, diethylene glycol, triethylene glycol, polyalkylene glycols such as polyethylene glycol, 1,2-propanediol, 1,3-propanediol, 1,3-butanediol, 1,4-butanediol, 1,6-hexanediol, neopentyl glycol, and any combination thereof. In order to achieve a polyol functionality of greater than 2, triols and/or tetraols may also be used. Suitable examples of the triols include trimethylolpropane and glycerol. Suitable examples of the tetraols include erythritol and pentaerythritol.

Dicarboxylic acids are the mixtures of aromatic acid and aliphatic acid. Suitable examples of the aromatic acids are phthalic acid, isophthalic acid, and terephthalic acid; while suitable examples of the aliphatic acids are adipic acid, azelaic acid, sebacic acid, glutaric acid, tetrachlorophthalic acid, maleic acid, fumaric acid, itaconic acid, malonic acid, suberic acid, 2-methyl succinic acid, 3,3-diethyl glutaric acid, and 2,2-dimethyl succinic acid. Anhydrides of these acids can likewise be used. Preferably, the aliphatic acids and aromatic acids are saturated, and are respectively adipic acid and isophthalic acid. Monocarboxylic acids, such as benzoic acid and hexane carboxylic acid, should be minimized or excluded.

The polyurethane prepolymers are dispersed into water with the assistance of the ionic surfactant, and then the polyamine to prepare the polyurethane dispersion.

Preferably, the ionic surfactant is anionic. Suitable examples of the anionic surfactants are selected from sulfonates, phosphates, carboxylates, and any combination thereof. Preferably, the anionic surfactant is sulfonates such as sodium dodecyl benzene sulfonate, sodium dodecyl sulfonate, sodium dodecyl diphenyl oxide disulfonate, sodium n-decyl diphenyl oxide disulfonate, isopropylamine dodecylbenzenesulfonate, and sodium hexyl diphenyl oxide disulfonate. More preferably, the anionic surfactant is sodium dodecyl benzene sulfonate.

The ionic surfactant is preferably introduced into the polyurethane prepolymer prior to the addition of water, but it is not outside the scope of the present invention that the surfactant is charged into water prior to the addition of the polyurethane prepolymer.

Polyamines are then added after the addition of the ionic surfactant, and water for chain extension purpose.

Preferably, the polyamines are diamines, in which each amine group is a primary or a secondary amine. Suitable examples of the diamines include ethylene diamine, 1,2- and 1,3-diaminopropane, 1,4-diaminobutane, 1,6-diaminohexane, isophorone diamine, and any combination thereof.

### The polyisocyanate crosslinker

The polyisocyanate crosslinker of the present invention has two or more isocyanate groups per molecule. Preferred polyisocyanate crosslinker has three or more isocyanate groups per molecule. More preferred polyisocyanate crosslinkers are trimers of monomeric diisocyanates.

Preferred monomeric diisocyanates for use in making the polyisocyanate crosslinker are monomeric aliphatic diisocyanates. Suitable examples of the monomeric aliphatic diisocyanates include 1,6-hexamethylene diisocyanate (HDI), 1-isocyanato-3-isocyanatomethyl-3,5,5-trimethyl-cyclohexane (IPDI), 4,4'-diisocyanato dicyclohexylmethane (H12MDI), di-isocyanatomethyl-cyclohexane (ADI), and any combination thereof. Preferred monomeric aliphatic diisocyanates are HDI and ADI, and most preferred monomeric aliphatic diisocyanate is HDI. The monomeric aromatic diisocyanates described above may be optionally used in the preparation of the polyisocyanate crosslinker.

Preferably, the polyisocyanate crosslinker is hydrophilic-modified. Hydrophilic modification is a process in which one or more of the isocyanate groups are reacted with a compound to attach a hydrophilic group to its backbone. Preferred hydrophilic groups are anionic groups or groups containing at least one ethylene oxide unit.

The polyisocyanate crosslinker is added to the polyurethane dispersion under stirring to prepare the polyurethane adhesive composition of the present invention.

### Other additives

The polyurethane dispersion may further comprise an adhesion promoter reactively binding onto the backbone of the polyurethane prepolymer. The adhesion promoter may also be added into the polyurethane adhesive composition as a post additive. It is well-known in the art of the selection to a proper adhesion promoter, and it is used at an amount range of from 0.1% to 3%, preferably from 0.1% to 2%, and more preferably from 0.1% to 1% by dry weight based on total dry weight of the polyurethane prepolymer.

Any adhesion promoters can be used in the present invention, while a silane adhesion promoter is preferred. Suitable examples of the silane adhesion promoters include amino silane such as aminopropyltriethoxysilane, epoxy silane such as 3-glycidoxypropyltriethoxysilane, and mercapto silane such as gamma-mercaptopropyltrimethoxysilane.

### The laminate

The polyurethane adhesive composition is applied onto the surface of substrates including metal foils, polyester films, and nylon films. Preferably, it is applied onto the surface of metal foils. More preferably, the metal foil is an aluminum (Al) foil.

The applied polyurethane adhesive composition is then dried to form a dry layer. The applied polyurethane adhesive composition is considered to be dry when the remainder of water is less than 10% of the applied polyurethane adhesive composition.

The surface of a polyethylene film is covered on the dry layer of applied polyurethane adhesive composition so that a polyethylene film-polyurethane adhesive-metal foil composite

(composite films, and also known as the laminate) is formed. The metal foil can be replaced by the polyester film or the nylon film in different applications. The laminate is preferably subjected to mechanical force to press the films even more closely. Such mechanical force is preferably applied by passing the laminate between rollers.

The laminate may be part of a thicker laminate comprising additional films and additional adhesive compositions. The additional films can be any films commonly used in the laminate industry, including polymer films, paper, and metal foils. The additional adhesive compositions can be the same or different from the polyurethane adhesive composition of the present invention, and can be any commonly used adhesive compositions in the laminate industry.

### EXAMPLES

### I. Raw materials

### Isocynate:

ISONATE™ 50 O,P' isocyanate (50 O,P') is a mixture of 2,4-MDI and 4,4'-MDI commercially available from The Dow Chemical Company.

ISONATE™ 125M isocyanate (125M) is a pure 4,4'-MDI commercially available from The Dow Chemical Company.

### Polyester polyol:

BESTER™ 104 polyol (BESTER 104) is a polyester polyol having one aliphatic group and one aromatic group, and is commercially available from The Dow Chemical Company.

HSM-822-3 polyol (HSM) is a polyester polyol having one aliphatic group and one aromatic group, and is commercially available from Xuchuan Chemical (Suzhou) Co., Ltd.

XCP-940AD polyol (XCP) is a polyester polyol having one aliphatic group and one aromatic group, and is commercially available from Xuchuan Chemical (Suzhou) Co., Ltd.

BESTER™ 127 polyol (BESTER 127) is a polyester polyol having one aliphatic group, but no aromatic group, and is commercially available from The Dow Chemical Company.

BESTER™ 264 polyol (BESTER 264) is a polyester polyol having one aliphatic group, but no aromatic group, and is commercially available from The Dow Chemical Company.

### Polyether polyol:

VORANOL™ CP750 polyol (CP750) is a polyether polyol, and is commercially available from The Dow Chemical Company.

VORANOL™ 2120 polyol (VORANOL 2120) is a polyether polyol, and is commercially available from The Dow Chemical Company.

VORANOL™ WD2139 polyol (WD2139) is a polyether polyol, and is commercially available from The Dow Chemical Company.

VORANOL™ V1010 polyol (V1010) is a polyether polyol, and is commercially available from The Dow Chemical Company.

CARBOWAX™ polyethylene glycol 1000 (PEG 1000) is a polyether polyol, and is commercially available from The Dow Chemical Company.

TERATHANE™ PTMEG 2000 polyol (PTMEG 2000) is polyether polyol, and is commercially available from Invista Company.

### Crosslinker:

CR3A crosslinker (CR3A) is a hydrophilic-modified polyisocyanate crosslinker commercially available from The Dow Chemical Company.

### Others:

RHODACAL™ DS-4 surfactant (DS-4) is an anionic surfactant with 24% solid content commercially available from Rhodia Company.

1,2-propane diamine (PDA) is a diamine commercially available from Sigma-Aldrich Company.

### II. Test methods

### 1. Bond strength (BS)

The laminates of the present invention were cut into 15mm width strips for T-peel test under 250mm/min crosshead speed using a 5940 Series Single Column Table Top System available from Instron Corporation. During the test, the tail of each strip was pulled slightly by fingers to make sure the tail remained 90 degree to the peeling direction. Three strips for each sample were tested and the average value was calculated. Results were in the unit of N/15mm. The higher the value is, the better the bond strength is.

### 2. Heat seal strength (HS)

The laminates were heat-sealed in a HSG-C Heat-Sealing Machine available from Brugger Company under 140°C seal temperature and 300N pressure for 1 second, then cooled down and cut into 15mm width strips for heat seal strength test under 250mm/min crosshead speed using a 5940 Series Single Column Table Top System available from Instron Corporation. Three strips for each sample were tested and the average value was calculated. Results were in the unit of N/15mm. The higher the value is, the better the heat seal strength is.

### 3. Coefficient of friction (COF)

The laminates were put into a 50°C oven for 48hrs, then taken out, cooled down, and cut into 64mmx64mm and 10cm×10cm pieces. The 64mmx64mm pieces were stuck onto the slider and the 10cm×10cm pieces were stuck onto the platform of a GM-1 Coefficient of Friction Tester (GM-1 Tester) available from Guangzhou Biaoji Packaging Equipment Co., Ltd., with polyethylene sides of both pieces facing each other. The GM-1 Tester was calibrated before the test. Three pairs of pieces (one 64mmx64mm piece and one 10cm×10cm piece) for each sample were tested and the average value was calculated. Results were reported as pure number. The lower the value is, the better the COF performance is.

### III. Examples

### 1. Preparation of the Inventive Polyurethane Dispersions 1 to 5 (PUs 1 to 5) and the Comparative Polyurethane Dispersions 6 to 11 (Comp. PUs 6 to 11)

Isocyanate was added to the mixture of polyols, and reacted at 65-90°C for 4-5hs until the mixture reached the theoretical isocyanate group (NCO) content and the polyurethane prepolymer was made. The polyurethane prepolymer was transferred into a plastic jar, and RHODACAL DS-4 surfactant was added into the plastic jar with stirring at 2000-3000rpm for 1-3 minutes. With stirring, 5°C DI water was added into the same jar to make a homogeneous dispersion. 1,2-propane diamine (PDA) water solution (20%) was then added into the dispersion slowly with stirring at 1000-1500rpm for 15-30 minutes to make the polyurethane dispersions. The components of each PU dispersion were listed in detail in Table 1.

**TABLE 1**

| 100% | Isocyanate | Polyester polyol | Polyether polyol |
|---|---|---|---|
| PU 1 | 32.6% 50 O,P' | 29.2% HSM | 33.3 % V1010; |
| | | | 4.9% PEG1000 |
| PU 2 | 22.2% 125M | 19.9% XCP | 54.4% VORANOL 2120; |
| | | | 3.5% PEG1000 |
| PU 3 | 18.6% 50 O,P' | 16.3% XCP | 58.9% WD2139; |
| | | | 6.2% PEG 1000 |
| PU 4 | 24.1% 125M | 22.5% BESTER 104 | 44.9% VORANOL 2120; |
| | | | 8.5% PEG1000 |
| PU 5 | 27.4% 50 O,P' | 28.3% HSM | 35% VORANOL 2120; |
| | | | 5.7% PEG 1000; |
| | | | 3.6% CP750 |
| Comp. PU 6 | 21.7% 125M | 48.5% BESTER 127 | 26.5% V1010; |
| | | | 3.3% PEG1000 |
| Comp. PU 7 | 24.1% 50 O,P' | 22.5% BESTER 264 | 44.9% VORANOL 2120; |
| | | | 8.5% PEG1000 |
| Comp. PU 8 | 46% 50 O,P' | 23.4% HSM | 26.7% V1010; |
| | | | 3.9% PEG 1000 |
| Comp. PU 9 | 17.6% 125M | - | 41.3% VORANOL 2120; |
| | | | 36.1% PTMEG 2000; |
| | | | 4.6% PEG 1000 |
| Comp. PU 10 | 18.3% 125M | 74.5% BESTER 127 | 7.2% PEG 1000 |
| Comp. PU 11 | 24.5% HDI | 32.7% HSM | 37.3 % V1010; |
| | | | 5.5% PEG 1000 |

### 2. Preparation of the Polyurethane Adhesive Compositions and the Laminates

The above polyurethane dispersions were each mixed with 2% by weight based on total weight of the PU dispersion, of a CR3A crosslinker for 15min to make the polyurethane adhesive composition. The polyurethane adhesive composition was applied to a polyethylene terephthalate (PET) backing Al foil, dried at 80°C in an oven for 40s, and then taken out from the oven and was covered (or laminated) by a 40um-thick PE film using a HL-101 Laminating Machine available from Cheminstruments, Inc. The Al foil-polyurethane adhesive composition-PE film laminate was cured for 48hrs at 50°C and tested.

### IV. Results

**TABLE 2**

| Adhesive | PU | BS (N/15mm) | HS (N/15mm) | COF |
|---|---|---|---|---|
| 1 | PU 1 | 5.4 | 51 | 0.2 |
| 2 | PU 2 | 5.1 | 44 | 0.23 |
| 3 | PU 3 | 4.8 | 40 | 0.28 |
| 4 | PU 4 | 4.3 | 42 | 0.26 |
| 5 | PU 5 | 4.5 | 56 | 0.25 |
| Comp. 6 | Comp. PU 6 | 3.4 | 35 | 0.45 |
| Comp. 7 | Comp. PU 7 | 2.3 | 30 | 0.38 |
| Comp. 8 | Comp. PU 8 | 2.0 | 20 | 0.46 |
| Comp. 9 | Comp. PU 9 | 1.6 | 18 | 0.5 |
| Comp. 10 | Comp. PU 10 | 2.5 | 28 | 0.27 |
| Comp. 11 | Comp. PU 11 | 2.2 | 29 | 0.25 |

Comp. PU 6 was the reaction product of a non-recommended polyester polyol (polyester polyol having one aliphatic group but no aromatic group) and insufficient polyether concentration. Comp. PU 7 used a non-recommended polyester polyol (polyester polyol having one aliphatic group but no aromatic group). Comp. PU 8 used higher isocyanate compared to PUs 1-5. Comp. PU 9 used higher polyether polyol compared to PUs 1-5, and did not use any polyester polyol. Comp. PU 10 used higher and non-recommended polyester polyol (polyester polyol having one aliphatic group but no aromatic group), and insufficient polyether polyol. While Comp. PU 11 used non-recommended isocyanate and higher polyester polyol compared to PUs 1-5. All these Comparative Polyurethane Dispersions, when made into Comparative Polyurethane Adhesive Composition (Adhesive), provided poorer BS, HS and COF compared to those made of Inventive Polyurethane Dispersions, i.e. PUs 1-5.

The results indicated the critical technical features of the present invention, that is, the components of the polyurethane adhesive composition and their concentrations.

## Claims

1. A polyurethane adhesive composition comprising a polyurethane dispersion and from 1.2% to 20%, by dry weight based on total dry weight of the polyurethane dispersion, a polyisocyanate crosslinker; wherein the polyurethane dispersion is a reaction product of, by dry weight, based on total dry weight of the polyurethane dispersion, from 10% to 40% of a monomeric aromatic diisocyanate, from 30% to 65% of a polyether polyol, from 15% to 30% of a polyester polyol having at least one aromatic group and one aliphatic group, from 0.1% to 8% of a polyamine, and from 0.5% to 10% of an ionic surfactant.

2. The polyurethane adhesive composition according to Claim 1 wherein each of the polyols has a molecular weight of from 500 to 4000 g/mol, and a functionality of from 1.8 to 4.

3. The polyurethane adhesive composition according to Claim 1 wherein the monomeric aromatic diisocyanate is selected from methylene diphenyl diisocyanate, toluene diisocyanate, and the combination thereof.

4. The polyurethane adhesive composition according to Claim 1 wherein the monomeric aromatic diisocyanate has a molecular weight of less than 300 g/mol.

5. The polyurethane adhesive composition according to Claim 1 wherein the polyether polyol is selected from polypropylene glycol, polyethylene glycol, polybutylene glycol, polytetramethylene ether glycol, and any combination thereof.

6. The polyurethane adhesive composition according to Claim 5 wherein the polyether polyol is a combination of polyethylene glycol and at least one of polypropylene glycol, polybutylene glycol, and polytetramethylene ether glycol.

7. The polyurethane adhesive composition according to Claim 1 wherein the polyester polyol is a condensation product of diols and dicarboxylic acids.

8. The polyurethane adhesive composition according to Claim 7 wherein the diols are selected from ethylene glycol, butylene glycol, diethylene glycol, triethylene glycol, polyalkylene glycols, 1,2-propanediol, 1,3-propanediol, 1,3-butanediol, 1,4-butanediol, 1,6-hexanediol, neopentyl glycol, and any combination thereof.

9. The polyurethane adhesive composition according to Claim 7 wherein the polyester polyol is a condensation product of diols, triols and dicarboxylic acids.

10. The polyurethane adhesive composition according to Claim 7 wherein the polyester polyol is a condensation product of diols, tetraols and dicarboxylic acids.

11. The polyurethane adhesive composition according to Claim 1 wherein the ionic surfactant is anionic and is selected from sulfonates, phosphates, carboxylates, and any combination thereof.

12. The polyurethane adhesive composition according to Claim 11 wherein the ionic surfactant is sodium dodecyl benzene sulfonate.

13. The polyurethane adhesive composition according to Claim 1 wherein the polyamine is selected from ethylene diamine, 1,2- and 1,3-diaminopropane, 1,4-diaminobutane, 1,6-diaminohexane, isophorone diamine, and any combination thereof.

14. The polyurethane adhesive composition according to Claim 1 wherein the polyisocyanate crosslinker is trimers of monomeric aliphatic diisocyanates selected from 1,6-hexamethylene diisocyanate, 1-isocyanato-3-isocyanatomethyl-3,5,5-trimethyl-cyclohexane, 4,4'-diisocyanato dicyclohexylmethane, di-isocyanatomethyl-cyclohexane, and any combination thereof.

15. The polyurethane adhesive composition according to Claim 14 wherein the polyisocyanate crosslinker is hydrophilically modified.

## Patentansprüche

1. Eine Polyurethanklebstoffzusammensetzung, beinhaltend eine Polyurethandispersion und zu 1,2 Trockengew.-% bis 20 Trockengew.-%, bezogen auf das Gesamttrockengewicht der Polyurethandispersion, einen Polyisocyanatvernetzer; wobei die Polyurethandispersion ein Reaktionsprodukt von, bezogen auf das Gesamttrockengewicht der Polyurethandispersion, zu 10 Trockengew.-% bis 40 Trockengew.-% ein monomeres aromatisches Diisocyanat, zu 30 Trockengew.-% bis 65 Trockengew.-% ein Polyetherpolyol, zu 15 Trockengew.-% bis 30 Trockengew.-% ein Polyesterpolyol mit mindestens einer aromatischen Gruppe und einer aliphatischen Gruppe, zu 0,1 Trockengew.-% bis 8 Trockengew.-% ein Polyamin und zu 0,5 Trockengew.-% bis 10 Trockengew.-% ein ionisches Tensid ist.

2. Polyurethanklebstoffzusammensetzung gemäß Anspruch 1, wobei jedes der Polyole ein Molekulargewicht von 500 bis 4000 g/mol und eine Funktionalität von 1,8 bis 4 aufweist.

3. Polyurethanklebstoffzusammensetzung gemäß Anspruch 1, wobei das monomere aromatische Diisocyanat aus Methylendiphenyldiisocyanat, Toluoldiisocyanat und der Kombination davon ausgewählt ist.

4. Polyurethanklebstoffzusammensetzung gemäß Anspruch 1, wobei das monomere aromatische Diisocyanat ein Molekulargewicht von weniger als 300 g/mol aufweist.

5. Polyurethanklebstoffzusammensetzung gemäß Anspruch 1, wobei das Polyetherpolyol aus Polypropylenglykol, Polyethylenglykol, Polybutylenglykol, Polytetramethylenetherglykol und einer beliebigen Kombination davon ausgewählt ist.

6. Polyurethanklebstoffzusammensetzung gemäß Anspruch 5, wobei das Polyetherpolyol eine Kombination von Polyethylenglykol und mindestens einem von Polypropylenglykol, Polybutylenglykol und Polytetramethylenetherglykol ist.

7. Polyurethanklebstoffzusammensetzung gemäß Anspruch 1, wobei das Polyesterpolyol ein Kondensationsprodukt von Diolen und Dicarbonsäuren ist.

8. Polyurethanklebstoffzusammensetzung gemäß Anspruch 7, wobei die Diole aus Ethylenglykol, Butylenglykol, Diethylenglykol, Triethylenglykol, Polyalkylenglykolen, 1,2-Propandiol, 1,3-Propandiol, 1,3-Butandiol, 1,4-Butandiol, 1,6-Hexandiol, Neopentylglykol und einer beliebigen Kombination davon ausgewählt sind.

9. Polyurethanklebstoffzusammensetzung gemäß Anspruch 7, wobei das Polyesterpolyol ein Kondensationsprodukt von Diolen, Triolen und Dicarbonsäuren ist.

10. Polyurethanklebstoffzusammensetzung gemäß Anspruch 7, wobei das Polyesterpolyol ein Kondensationsprodukt von Diolen, Tetraolen und Dicarbonsäuren ist.

11. Polyurethanklebstoffzusammensetzung gemäß Anspruch 1, wobei das ionische Tensid anionisch ist und aus Sulfonaten, Phosphaten, Carboxylaten und einer beliebigen Kombination davon ausgewählt ist.

12. Polyurethanklebstoffzusammensetzung gemäß Anspruch 11, wobei das ionische Tensid Natriumdodecylbenzolsulfonat ist.

13. Polyurethanklebstoffzusammensetzung gemäß Anspruch 1, wobei das Polyamin aus Ethylendiamin, 1,2- und 1,3-Diaminopropan, 1,4-Diaminobutan, 1,6-Diaminohexan, Isophorondiamin und einer beliebigen Kombination davon ausgewählt ist.

14. Polyurethanklebstoffzusammensetzung gemäß Anspruch 1, wobei der Polyisocyanatvernetzer Trimere von monomeren aliphatischen Diisocyanaten sind, ausgewählt aus 1,6-Hexamethylendiisocyanat, 1-Isocyanato-3-isocyanatomethyl-3,5,5-trimethylcyclohexan, 4,4'-Diisocyanatodicyclohexylmethan, Diisocyanatomethylcyclohexan und einer beliebigen Kombination davon.

15. Polyurethanklebstoffzusammensetzung gemäß Anspruch 14, wobei der Polyisocyanatvernetzer hydrophil modifiziert ist.

## Revendications

1. Une composition d'adhésif polyuréthane comprenant une dispersion de polyuréthane et de 1,2 % à 20 %, en poids sec rapporté au poids sec total de la dispersion de polyuréthane, d'un agent de réticulation polyisocyanate ; dans laquelle la dispersion de polyuréthane est un produit de réaction, en poids sec, rapporté au poids sec total de la dispersion de polyuréthane, de 10 % à 40 % d'un diisocyanate aromatique monomère, de 30 % à 65 % d'un polyol de polyéther, de 15 % à 30 % d'un polyol de polyester ayant au moins un groupe aromatique et un groupe aliphatique, de 0,1 % à 8 % d'une polyamine, et de 0,5 % à 10 % d'un tensioactif ionique.

2. La composition d'adhésif polyuréthane selon la revendication 1 dans laquelle chacun des polyols a une masse moléculaire allant de 500 à 4 000 g/mol, et une fonctionnalité allant de 1,8 à 4.

3. La composition d'adhésif polyuréthane selon la revendication 1 dans laquelle le diisocyanate aromatique monomère est sélectionné parmi le diisocyanate de méthylènediiphényle, le diisocyanate de toluène, et la combinaison de ceux-ci.

4. La composition d'adhésif polyuréthane selon la revendication 1 dans laquelle le diisocyanate aromatique monomère a une masse moléculaire inférieure à 300 g/mol.

5. La composition d'adhésif polyuréthane selon la revendication 1 dans laquelle le polyol de polyéther est sélectionné parmi le polypropylène glycol, le polyéthylène glycol, le polybutylène glycol, le polytétraméthylène éther glycol, et n'importe quelle combinaison de ceux-ci.

6. La composition d'adhésif polyuréthane selon la revendication 5 dans laquelle le polyol de polyéther est une combinaison de polyéthylène glycol et d'au moins un élément parmi le polypropylène glycol, le polybutylène glycol, et le polytétraméthylène éther glycol.

7. La composition d'adhésif polyuréthane selon la revendication 1 dans laquelle le polyol de polyester est un produit de condensation de diols et d'acides dicarboxyliques.

8. La composition d'adhésif polyuréthane selon la revendication 7 dans laquelle les diols sont sélectionnés parmi l'éthylène glycol, le butylène glycol, le diéthylène glycol, le triéthylène glycol, des polyalkylène glycols, le 1,2-propanediol, le 1,3-propanediol, le 1,3-butanediol, le 1,4-butanediol, le 1,6-hexanediol, le néopentyl glycol, et n'importe quelle combinaison de ceux-ci.

9. La composition d'adhésif polyuréthane selon la revendication 7 dans laquelle le polyol de polyester est un produit de condensation de diols, de triols et d'acides dicarboxyliques.

10. La composition d'adhésif polyuréthane selon la revendication 7 dans laquelle le polyol de polyester est un produit de condensation de diols, de tétraols et d'acides dicarboxyliques.

11. La composition d'adhésif polyuréthane selon la revendication 1 dans laquelle le tensioactif ionique est anionique et est sélectionné parmi des sulfonates, des phosphates, des carboxylates, et n'importe quelle combinaison de ceux-ci.

12. La composition d'adhésif polyuréthane selon la revendication 11 dans laquelle le tensioactif ionique est du dodécyl benzène sulfonate de sodium.

13. La composition d'adhésif polyuréthane selon la revendication 1 dans laquelle la polyamine est sélectionnée parmi l'éthylène diamine, le 1,2- et 1,3-diaminopropane, le 1,4-diaminobutane, le 1,6-diaminohexane, l'isophorone diamine, et n'importe quelle combinaison de ceux-ci.

14. La composition d'adhésif polyuréthane selon la revendication 1 dans laquelle l'agent de réticulation polyisocyanate est des trimères de diisocyanates aliphatiques monomères sélectionnés parmi le 1,6- diisocyanate d'hexaméthylène, le 1-isocyanato-3-isocyanatométhyl-3,5,5-triméthyl-cyclohexane, le 4,4'-diisocyanato dicyclohexylméthane, le di-isocyanatométhyl-cyclohexane, et n'importe quelle combinaison de ceux-ci.

15. La composition d'adhésif polyuréthane selon la revendication 14 dans laquelle l'agent de réticulation polyisocyanate est modifié hydrophiliquement.
